Europäisches Patentamt

**European Patent Office**

Office européen des brevets

(11) Numéro de publication : **0 211 761**
**B1**

# FASCICULE DE BREVET EUROPÉEN

(45) Date de publication du fascicule du brevet :
**15.03.89**

(51) Int. Cl.⁴ : **G 01 N   1/24**

(21) Numéro de dépôt : **86401715.7**

(22) Date de dépôt : **31.07.86**

(54) **Capteur individuel portatif amélioré pour analyse d'empoussiérage.**

(30) Priorité : **05.08.85 FR 8511941**

(43) Date de publication de la demande :
**25.02.87 Bulletin 87/09**

(45) Mention de la délivrance du brevet :
**15.03.89 Bulletin 89/11**

(84) Etats contractants désignés :
**AT BE CH DE FR GB IT LI LU NL SE**

(56) Documents cités :
**EP--A-- 0 102 870**
**DE--A-- 2 016 033**
**FR--A-- 2 086 984**
**US--A-- 4 152 923**

(73) Titulaire : **CHARBONNAGES DE FRANCE, Etablisse-**
**ment public dit:**
**Tour Albert 1er 65 avenue de Colmar**
**F-92507 Rueil Malmaison Cedex (FR)**

(72) Inventeur : **Courbon, Paul**
**59bis rue Wallon Apremont**
**F-60300 Senlis (FR)**

(74) Mandataire : **Chevallier, Robert Marie Georges et al**
**Cabinet BOETTCHER 23, rue La Boétie**
**F-75008 Paris (FR)**

## Description

L'invention a pour objet un capteur individuel portatif, que toute personne peut porter sur elle, servant à prélever dans l'atmosphère qui entoure cette personne les poussières en suspension et à retenir ces poussières en vue d'analyse ultérieure.

Ce capteur est du même genre que celui qui est décrit dans le document FR-A-2 531 534 ; il est conçu pour retenir les poussières qui ont des dimensions telles qu'elles peuvent pénétrer dans les alvéoles pulmonaires de la personne qui le porte et y être retenues. A l'aide de ce capteur on peut évaluer et même doser la quantité de poussières dites respirables qu'une personne a pu inhaler pendant une période donnée.

Le capteur décrit dans le document cité ci-dessus donne satisfaction mais il a été constaté à l'usage qu'il supporte mal de fonctionner dans une atmosphère fortement empoussiérée ou dans une atmosphère qui contient une quantité élevée de poussières de dimensions supérieures à celles des poussières respirables.

En effet, ce capteur est équipé d'un bloc filtrant dans lequel sont retenues les poussières considérées comme respirables et dont la grosseur est inférieure à 5 microns, ainsi qu'on l'admet généralement. Ce bloc filtrant est précédé d'un bloc de préfiltration destiné à retenir les poussières dont la grosseur est supérieure à 5 microns ; autrement dit, le bloc de préfiltration réalise dans les poussières en suspension dans le milieu environnant, qui sont aspirées par le capteur, une coupure à la façon d'un filtre passe-bas afin de ne laisser arriver au bloc filtrant que les poussières comprises dans la gamme inférieure à 5 microns. Dans le document précité, il a été précisé que le bloc filtrant retient les poussières dont la grosseur est comprise entre 0,5 et 5 $\mu m$ parce que l'on admet aussi que les poussières inférieures à 0,5 $\mu m$ sont trop fines pour être retenues par le bloc filtrant et probablement aussi par les poumons. Les valeurs indiquées ont une importance relative et le capteur peut être adapté facilement à des gammes de valeurs différentes.

Il est apparu à l'usage que la conception même du capteur qui est l'objet du document cité plus haut comporte un inconvénient quand on utilise le capteur dans une atmosphère chargée de nombreuses poussières dont la grosseur est supérieure à 5 $\mu m$ ou à une autre valeur comparable qui serait retenue comme valeur de coupure du bloc de préfiltration. On constate en effet dans ce cas que le capteur est engorgé de manière plus ou moins rapide par les poussières les plus grosses.

Le but principal de l'invention est de remédier à cette situation et d'apporter une conception générale d'un capteur individuel de poussières du type défini ci-dessus capable de séparer et de contenir une quantité élevée de poussières de grosseur supérieure à une valeur de coupure déterminée.

Un but secondaire de l'invention est de parvenir à une conception générale de ce capteur individuel de poussières ayant l'avantage expliqué ci-dessus susceptible d'être adapté facilement, du fait de sa conception même, à une quantité beaucoup plus considérable que la quantité envisagée initialement de poussières de grosseur supérieure à la valeur de coupure prévue.

Dans un capteur portatif individuel de poussières susceptibles d'être retenues dans les poumons, ayant un couvercle à axe général longitudinal, avec une entrée d'air centrale et au moins une sortie d'air latérale, une coupelle montée rotative autour dudit axe à l'intérieur du couvercle et contenant une couronne en mousse filtrante à canal central d'arrivée d'air, un chapeau coiffant l'entrée d'air centrale du couvercle et se terminant par une paroi extrême à entrée d'air centrale, ce chapeau contenant un bloc de préfiltration disposé en amont de l'entrée d'air centrale du couvercle et terminé par une première face extrême éloignée du couvercle, selon l'invention le bloc de préfiltration a une ouverture centrale de passage raccordée à l'entrée d'air centrale du couvercle et ce bloc de préfiltration est supporté à l'intérieur du chapeau en laissant libre par rapport à ce chapeau un espace périphérique extérieur, cependant que la première face extrême de ce bloc de préfiltration est garnie d'une paroi d'impact imperméable au gaz qui obture l'entrée de l'ouverture centrale de passage.

De préférence, le bloc de préfiltration est conformé et supporté pour limiter avec le couvercle et avec le chapeau un volume annulaire qui est en communication avec l'espace périphérique et qui entoure l'ouverture centrale de passage raccordée à l'entrée d'air centrale.

Selon un mode de réalisation, la face extrême extérieure du couvercle est pourvue d'un bossage central traversé par le passage central raccordé à l'ouverture centrale de passage d'air du bloc de préfiltration, ce bossage central ayant en sens transversal une grosseur inférieure à celle du chapeau. Le bloc de préfiltration est supporté par ce bossage central. Quand le volume annulaire mentionné ci-dessus existe, il est limité en sens transversal par le bossage central et par le chapeau et en sens longitudinal par le couvercle et par le bloc de préfiltration.

De préférence, la paroi d'impact imperméable est une paroi munie d'un bord périphérique relevé s'étendant longitudinalement à l'opposé de la couronne en mousse filtrante.

Selon un mode de réalisation de l'invention, ce bord périphérique est prolongé comme un cylindre creux en direction du couvercle, dans l'espace périphérique mentionné plus haut, sur une fraction substantielle de la longueur en sens axial du bloc de préfiltration, en entourant ce dernier sans contact avec lui.

Avantageusement, l'ouverture centrale du chapeau est traversée librement par une tige qui s'étend à l'extérieur en passant par cette ouverture à partir de la paroi d'impact et cette tige porte à son extrémité libre extérieure un masque qui s'étend devant la face extrême du chapeau. La couronne en mousse filtrante est contenue dans la coupelle rotative en limitant un volume libre avec le fond de cette coupelle.

De préférence, la face intérieure de la paroi extrême du chapeau a un prolongement intérieur à flanc incurvé concave qui s'avance concentriquement audit passage central à l'intérieur du canal central de la couronne en mousse filtrante tandis que la face intérieure de la coupelle a aussi une protubérance à flanc incurvé concave qui s'avance à l'intérieur du canal central coaxialement à la couronne en mousse filtrante.

Pour mieux faire comprendre le perfectionnement apporté au capteur individuel portatif et pour en faire apprécier les avantages, on donnera maintenant une description d'un mode préféré de réalisation et d'une variante possible. On se reportera aux dessins annexés dans lesquels :

— la figure 1 est une vue en élévation en coupe par un plan passant par l'axe général d'un capteur individuel perfectionné selon l'invention,

— la figure 2 est une vue analogue à la fig. 1 en élévation et en coupe montrant une variante possible.

Le capteur représenté a une structure analogue à celle du capteur décrit dans le document précité qui doit être considéré comme incorporé au présent texte par la citation qui en est faite. On ne décrira donc en détail que le perfectionnement apporté par la présente invention en relation avec les pièces environnantes. Un corps creux 1 contient un moteur 2 et des sources d'énergie électrique en même temps qu'un circuit de régulation 4. L'arbre du moteur 2 sort du corps 1 à travers un palier 5 et il porte par son extrémité libre une coupelle rotative 6 ouverte en direction opposée au corps 1. La face intérieure 7 du fond de cette coupelle 6 présente une protubérance centrale 8 à flanc incurvé concave se raccordant avec cette surface intérieure 7. La face intérieure 9 de la paroi latérale de cette même coupelle 6 a un épaulement circulaire 10 éloigné à la face intérieure 7 du fond. Une couronne 11 en mousse filtrante ayant un canal central 12 est contenue dans la coupelle 6 ; elle s'étend entre le bord libre extrême de l'épaulement 10 de sorte qu'il existe entre la face extrême 13 de la couronne 11 et la face interne 7 du fond un volume libre 14. La protubérance centrale 8 s'étend plus loin que le plan transversal qui contient l'épaulement 10 de sorte qu'elle pénètre à l'intérieur du canal central 12.

L'ensemble de la coupelle 6 avec la couronne 1 est enfermé dans un couvercle 15 qui se fixe au corps 1 de manière démontable. Ce couvercle 15 a dans sa paroi latérale des trous 16 de sortie d'air et sa paroi extrême 17 éloignée du corps 1 comprend un bossage central extérieur 18 ; la face interne de cette paroi extrême 17 a à l'opposé du bossage 18 un prolongement intérieur 19 à flanc incurvé concave qui s'avance à l'intérieur du canal central 12 de la couronne 11 en variante le bossage central 18 pourrait être une pièce rapportée.

Le corps 1 et le couvercle 15 ont un axe général longitudinal 20 indiqué par un trait mixte autour duquel sont disposés aussi, coaxialement, la coupelle rotative 6 avec la protubérance centrale 8, la couronne 11 et son canal central 12, le couvercle 15 avec le bossage 18 et le prolongement 19. Ces deux dernières pièces, c'est-à-dire le bossage 18 et le prolongement 19 sont traversés par un passage central 21 dont l'axe est confondu avec l'axe 20.

Le bossage central 18 se termine par une face extrême plane 22 et par une bordure interne saillante 23 qui entoure le passage central 21. Cette face plane 22 et cette bordure interne 23 servent à tenir en position un bloc de préfiltration 24, réalisé en mousse filtrante de préférence, qui a une ouverture centrale de passage 25 dans laquelle s'ajuste la bordure interne saillante 23. A l'opposé de sa face extrême par laquelle il est supporté par le bossage central 18, le bloc de préfiltration 24 se termine par une face extrême 26, qui est recouverte d'une paroi d'impact 27 étanche au gaz qui obture l'entrée de l'ouverture centrale de passage 25. Cette paroi d'impact pourrait être un simple disque fixé, par exemple à l'aide d'un adhésif, à la face extrême 26. Il est préférable que la paroi d'impact 27 possède un bord extérieur étendu en sens longitudinal la transformant en une coupelle auxiliaire 28 dont le volume creux est tourné à l'opposé du bloc de préfiltration 24. Avantageusement, cette coupelle auxiliaire 28 contient aussi une mousse filtrante 29.

L'ensemble qui vient d'être décrit et qui est supporté par le bossage central 18 est contenu dans un chapeau 30 ; ce dernier est appliqué par son bord extrême libre contre la face extérieure de la paroi extrême 17 du couvercle 15 auquel il est fixé de manière démontable. Ce chapeau 30 est coaxial à l'axe général 20 et il est terminé à l'opposé du couvercle 15 par une paroi extrême 31 dans laquelle est prévue une ouverture centrale 32 concentrique à l'axe général 20.

Le diamètre intérieur du chapeau 30 est supérieur au diamètre extérieur du bloc de filtration 24 et par conséquent au diamètre extérieur de la coupelle auxiliaire 28. Il existe donc autour du bloc de filtration 24 un espace périphérique extérieur 33 que l'air aspiré par l'ouverture centrale 32 est obligé d'emprunter après avoir contourné la coupelle auxiliaire 28.

Le bossage central 18 a une dimension en sens longitudinal et une dimension en sens transversal par rapport à l'axe général 20 telles qu'il existe autour de ce bossage 18, à l'intérieur du chapeau 30, entre le bloc de préfiltration 24 et la paroi extrême 17 du couvercle 15 un volume annulaire 34. Ce dernier est en communication avec l'espace périphérique 33 par un passage annulaire 35. Ce dernier est obtenu avantageusement au moyen d'un collet 36 qui est porté par la face extérieure de la paroi extrême 17 du couvercle 15, concentriquement au bossage central 18. Sur ce collet 36 s'enfile et s'ajuste le chapeau 30 que l'on fixe à l'aide de vis. En choisissant convenablement les dimensions, on peut obtenir entre le volume annulaire 34 et l'espace périphérique 33 un passage annulaire 35 comparable à un étranglement limité par le collet 36 et le bloc de filtration 24 mis en place.

Dans cet exemple, la paroi d'impact qui est aussi le fond de la coupelle auxiliaire 28 porte une tige 37 qui passe à travers l'ouverture centrale 32 du chapeau 30 et qui porte par son extrémité libre extérieure un masque 38. Ce dernier s'étend devant la face extrême du chapeau 30. Il est assez développé en sens transversal à l'axe général 20 pour empêcher l'air d'entrer directement pour l'ouverture centrale 32 et pour l'obliger à suivre un parcours tortueux.

Le capteur de l'invention fonctionne de la même façon que le capteur du document cité au début mais sa nouvelle conception apporte les avantages appréciables suivants.

Quand la coupelle 6 est entraînée en rotation par le moteur 2, elle chasse, par effet centrifuge, l'air à travers les trous de sortie d'air 16 du couvercle 17 et elle produit une aspiration dans le sens de l'axe général 20 ; l'air aspiré entre par l'ouverture centrale 32. Du fait de la présence de la paroi étanche 27, l'air ne peut pas pénétrer directement dans le bloc de préfiltration 24 ; il doit effectuer un premier changement de direction en sens radial, puis un second changement de direction en sens longitudinal pour emprunter l'espace périphérique extérieur 33. L'emploi de la coupelle auxiliaire 28 dont le fond constitue la paroi d'impact étanche 27 permet d'exploiter complètement l'effet de ces changements de direction. Les poussières les plus grosses changent moins facilement de direction et elles entrent dans la coupelle auxiliaire 28 jusqu'à venir heurter la paroi d'impact 27. Cette paroi, et l'ensemble de la face intérieure de la coupelle auxiliaire 28 pourraient être enduites d'une couche graisseuse capable de retenir les poussières. Il est préférable de garnir l'intérieur de la coupelle auxiliaire 28 d'une mousse filtrante 29 dans laquelle une grande partie des poussières les plus grosses restent emprisonnées.

Quand l'air est arrivé dans l'espace périphérique extérieur 33, il est contraint de traverser le bloc de préfiltration 24 en suivant un chemin substantiellement radial, afin d'atteindre l'ouverture centrale de passage 25. Il subit un nouveau changement de direction. Etant donné qu'il est préférable d'utiliser le capteur avec l'axe général 20 disposé verticalement, comme représenté sur la figure, ce changement de direction et l'action de la gravité font que les poussières les plus grosses, qui n'ont pas été retenues par la coupelle auxiliaire 28 et par la mousse filtrante 29 contenue dans celle-ci, tombent dans le volume annulaire 34. Le passage annulaire étranglé 35 est assez large pour les laisser passer mais il freine leur sortie en grande quantité s'il arrivait que le capteur soit renversé.

L'explication qui précède montre que le capteur est apte à fonctionner dans une atmosphère fortement poussiéreuse et à retenir un volume important de poussières dites non respirables avant qu'elles parviennent à la couronne 11 en mousse filtrante. En outre la conception même du capteur permet de l'adapter à l'avance, sans modification importante de sa structure à une atmosphère poussiéreuse déterminée. L'exemple décrit ci-dessus est celui de l'adaptation du capteur à l'atmosphère la plus chargée en poussière.

L'emploi de la paroi d'impact 26 et les changements de direction qui en résultent procurent déjà un résultat notable. La transformation de cette paroi d'impact 26 en coupelle auxiliaire 28 accroît l'effet de retenue des poussières les plus grosses ; la mousse filtrante 29 incluse dans cette coupelle améliore encore cet effet. Cette mousse 29 peut être choisie pour qu'elle retienne de préférence les poussières de grosseur supérieure à une valeur donnée. En général une mousse à pores ouverts de grade 45 (c'est-à-dire à 45 cellules par longueur de 25,4 mm) convient.

La mousse filtrante qui constitue le bloc de préfiltration 24 peut aussi être adaptée à une atmosphère poussiéreuse donnée. Cette mousse est généralement aussi du grade 45, mais on peut utiliser des anneaux concentriques enfilés les uns dans les autres, comme indiqué en trait mixte, pour produire un effet de filtration progressivement plus pousé avant que l'air arrive à l'ouverture centrale de passage 25.

Après avoir parcouru cette ouverture centrale de passage 25, l'air entre dans le passage central 21 puis dans le canal central d'arrivée d'air 12 à partir duquel l'effet centrifuge de la rotation et le flanc incurvé de la protubérance centrale tendent à le répandre en sens radial dans le volume libre 14. A partir de ce dernier l'air ne peut parvenir aux trous de sortie 16 qu'en traversant, en quelque sorte à contre-courant, l'épaisseur de la couronne 11 en mousse filtrante où les poussières respirables sont retenues.

A nouveau, si des poussières de grosseur supérieure à la valeur de 5 microns admise pour les poussières respirables, sont parvenues jusqu'au volume libre 14, elles peuvent rester dans ce dernier sans nuire au fonctionnement du capteur.

Grâce à la conception nouvelle du capteur, ce dernier peut fonctionner efficacement et retenir dans la couronne 11 les poussières dites respirables, par exemple dans la gamme de 0,5 à 5 microns, dans une atmosphère fortement chargée d'une quantité importante de poussières plus grosses. Ces dernières sont emprisonnées au passage par des moyens successifs capables de contenir un volume important de ces poussières.

On notera que le volume annulaire 34 pourrait être rempli d'une bague en mousse à pores ouverts de grade supérieur à 45 afin de retenir les poussières les plus grosses, l'ouverture centrale de passage 25 restant raccordée directement à l'entrée d'air centrale 21 du couvercle 15.

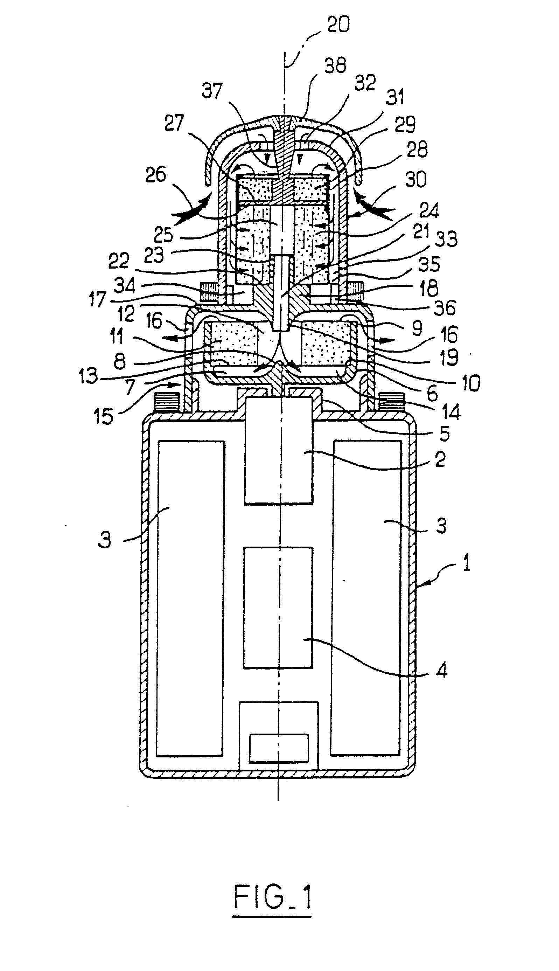

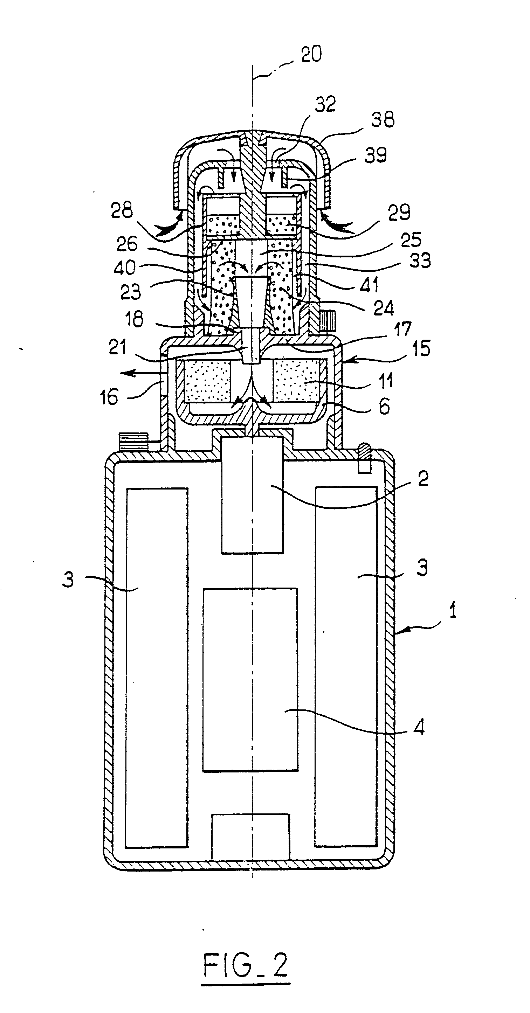

La figure 2 montre un capteur de poussières tout à fait analogue dans l'ensemble à celui de la figure 1 pour lequel on a repris les mêmes références pour désigner les pièces identiques.

On ne le décrira pas à nouveau en entier. On se limitera à faire ressortir les différences, qui sont les suivantes et qui sont en relation avec un souci de simplification de la constitution du capteur avec le maintien sinon une amélioration de son efficacité.

L'ouverture 32 du chapeau 30 s'ouvre intérieurement dans un cylindre creux 39 concentriquement à l'axe 20 afin de mieux canaliser vers la mousse filtrante 29 les poussières que celle-ci doit retenir. La coupelle auxiliaire 28 a une dimension accrue en sens axial et la mousse filtrante 29 occupe seulement la moitié environ de la longueur de cette coupelle, du côté du bloc de préfiltration 24.

Le bossage 18 et le volume annulaire 34 visibles sur la figure 1 ont été supprimés ; le bloc de préfiltration 24 s'étend jusqu'à venir en contact avec la face extérieure de la paroi extrême 17 du couvercle 15.

La coupelle auxiliaire 28 dont fait partie la paroi d'impact 27 a une paroi latérale qui est prolongée à partir de cette paroi d'impact 27 comme un cylindre creux en direction du couvercle 15, dans l'espace périphérique extérieur 33, sur une fraction substantielle de la longueur du bloc de préfiltration 24. De plus, au moins dans cette partie où il est entouré par la paroi latérale cylindrique prolongée 40 de la coupelle auxiliaire 28, ce bloc de préfiltration 24 a un diamètre réduit de sorte que cette paroi latérale 40 l'entoure sans le toucher. L'air chargé des poussières les moins grosses peut donc emprunter l'espace périphérique 33, en longeant la paroi latérale prolongée 40 et traverser le bloc de préfiltration 24, au besoin en remontant dans l'espace annulaire 41 ménagé intérieurement entre cette paroi latérale 40 et la face extérieure latérale du bloc de préfiltration 24, puisque cet espace annulaire 41 communique avec l'espace périphérique 33.

Par ailleurs, il est suffisant de prévoir sur le couvercle 15, dans sa paroi latérale, un unique trou de sortie d'air 16.

## Revendications

1. Capteur portatif individuel de poussières susceptibles d'être retenues dans les poumons, ayant un couvercle (15) à axe général longitudinal (20) avec une entrée d'air centrale (21) et au moins une sortie d'air latérale (16), une coupelle (6) montée rotative autour dudit axe général (20) à l'intérieur de ce couvercle (15) et contenant une couronne (11) en mousse filtrante à canal central d'arrivée d'air (12), un chapeau (30) terminé par une paroi extrême (31) à ouverture centrale (32) contenant un bloc de préfiltration (24) qui est disposé en amont de l'entrée d'air centrale (21) du couvercle (15) et qui est terminé par une première face extrême (26) éloignée du couvercle (15), caractérisé en ce que le bloc de préfiltration (24) a une ouverture centrale de passage (25) réunie à l'entrée d'air centrale (21) du couvercle (15), ledit bloc (24) étant supporté à l'intérieur du chapeau (30) en laissant libre par rapport à ce dernier un espace périphérique extérieur (33) cependant que ladite première face extrême (26) du même bloc de préfiltration (24) est garnie d'une paroi d'impact (27) étanche au gaz et obturant l'entrée de l'ouverture centrale de passage (25).

2. Capteur selon la revendication 1 caractérisé en ce que le bloc de préfiltration (24) est conformé et supporté à l'intérieur du chapeau (30) pour limiter avec ce chapeau (30) et le couvercle (15) un volume annulaire (34) communiquant avec l'espace périphérique extérieur (33) et entourant l'ouverture centrale de passage (25) réunie à l'entrée d'air centrale (21).

3. Capteur selon la revendication 2 caractérisé en ce que le couvercle (15) a une face extrême pourvue à l'intérieur du chapeau (30) d'un bossage central (18) entourant l'axe général (20) et traversé par le passage central (21) raccordé à l'ouverture centrale de passage d'air (25) du bloc de préfiltration (24), ce bossage central (18) supportant le bloc de préfiltration (24) et ayant en sens transversal audit axe (20) une grosseur inférieure à celle du chapeau (30) de sorte qu'il limite avec ce dernier, en sens transversal, le volume annulaire (34).

4. Capteur selon la revendication 1 caractérisé en ce que la paroi d'impact (27) est la paroi de fond d'une coupelle auxiliaire (28) dont le volume creux est ouvert en direction de l'ouverture centrale (32) de la paroi extrême (31) du chapeau (30).

5. Capteur selon la revendication 4 caractérisé en ce que la coupelle auxiliaire (28) contient une mousse filtrante (29).

6. Capteur selon la revendication 1 caractérisé en ce que la couronne (11) en mousse filtrante est contenue dans la coupelle rotative (6) en limitant avec la face intérieure (7) du fond de cette coupelle (6) un volume libre (14).

7. Capteur selon la revendication 6 caractérisé en ce que ladite face intérieure (7) a une protubérance centrale (8) à flanc incurvé concave qui s'avance à l'intérieur du canal central d'arrivée d'air (12) de la couronne (11) en mousse filtrante coaxialement à cette couronne (11).

8. Capteur selon la revendication 1 caractérisé en ce que la face interne de la paroi extrême (17) du couvercle (15) a autour de l'entrée d'air centrale (21) un prolongement intérieur (19) qui s'avance à l'intérieur du canal central (12) de la couronne (11).

9. Capteur selon l'une quelconque des revendications 1 et 3 caractérisé en ce que le bossage central (18) est terminé par une face extrême (22) avec une bordure saillante (23) qui entoure le passage central (21), cette face (22) et cette bordure saillante (23) servant à tenir en place le bloc de préfiltration (24) dont l'ouverture centrale de passage (25) est prévue pour recevoir la bordure interne saillante (23).

10. Capteur selon la revendication 9 caractérisé en ce que la face extérieure de la paroi extrême (17) du couvercle (15) porte un collet (36) concentrique à l'axe général (20) servant au montage du chapeau (30) et limitant avec le bloc de préfiltration (24) un passage annulaire étranglé (35) de communication entre l'espace périphérique (33) et le volume annulaire (34).

11. Capteur selon la revendication 1 caractérisé en ce que la paroi d'impact (27) porte une tige (37) qui passe à travers l'ouverture centrale (32) du chapeau (30) et qui est munie à son extrémité libre extérieure d'un masque (38) s'étendant devant la face extrême de ce chapeau (30).

12. Capteur selon l'une quelconque des revendications 4, 5 caractérisé en ce que la coupelle auxiliaire (28) a, à partir de sa paroi de fond constituant la paroi d'impact (27), une paroi latérale (40) prolongée à partir de cette paroi d'impact (27) comme un cylindre creux en direction du couvercle (15), dans l'espace périphérique extérieur (33), sur une fraction substantielle de la longueur du bloc de préfiltration (24), en entourant ce dernier sans le toucher et en limitant avec la face extérieure latérale de ce bloc de préfiltration (24) un espace annulaire (41) qui communique avec l'espace périphérique (33).

**Claims**

1. A portable individual collector device for dust capable of being retained in the lungs, having a cover (15) with a longitudinal general axis (20) with a central air inlet (21) and at least one lateral air outlet (16), a cup member (6) which is mounted rotatably about said general axis (20) within said cover (15) and containing a ring (11) of filter foam with a central air feed duct (12), a cap (30) which is terminated by an end wall (31) having a central opening (32) and containing a prefiltration block (24) which is disposed upstream of the central air intake (21) of the cover (15) and which is terminated by a first end face (26) which is remote from the cover (15) characterised in that the prefiltration block (24) has a central flow opening (25) connected to the central air intake (21) of the cover (15), said block (24) being supported within the cap (30) leaving an external peripheral space (33) free with respect to the latter while said first end face (26) of said prefiltration block (24) is provided with a gas-tight impact wall member (27) which closes off the intake of the central flow opening (25).

2. A collector device according to claim 1 characterised in that the prefiltration block (24) is shaped and supported within the cap (30) to delimit with said cap (30) and the cover (15) an annular volume (34) which communicates with the external peripheral space (33) and which surrounds the central flow opening (25) connected to the central air intake (21).

3. A collector device according to claim 2 characterised in that the cover (15) has an end face provided on the inside of the cap (30) with a central boss (18) which is disposed around the central axis (20) and through which passes the central passage (21) connected to the central air flow opening (25) of the prefiltration block (24), said central boss (18) supporting the prefiltration block (24) and being of a size, in a direction which is transverse with respect to said axis (20), that is less than the size of the cap (30) so that with the latter, in a transverse direction, it delimits the annular volume (34).

4. A collector device according to claim 1 characterised in that the impact wall member (27) is the bottom wall portion of an auxiliary cup member (28), the open volume of which is open in the direction of the central opening (32) of the end wall (31) of the cap (30).

5. A collector device according to claim 4 characterised in that the auxiliary cup member (28) contains a filter foam (29).

6. A collector device according to claim 1 characterised in that the ring (11) of filter foam is contained in the rotary cup member (6), delimiting a free volume (14) with the internal face (7) of the bottom of said cup member (6).

7. A collector device according to claim 6 characterised in that said internal face (7) has a central projection (8) with a concave curved side surface, and which extends into the central air feed duct (12) of the ring (11) of filter foam in coaxial relationship with the ring (11).

8. A collector device according to claim 1 characterised in that the internal face of the end wall portion (17) of the cover (15) is provided, around the central air intake (21), with an internal extension portion (19) which extends into the central duct (12) in the ring (11).

9. A collector device according to either one of claims 1 and 3 characterised in that the central boss (18) is terminated by an end face (22) with a projecting edge portion (23) which is disposed around the central passage (21), said face (22) and said projecting edge portion (23) serving to hold in position the prefiltration block (24) whose central flow opening (25) is arranged to receive the internal projecting edge portion (23).

10. A collector device according to claim 9 characterised in that the external face of the end wall portion (17) of the cover (15) carries a collar (36) which is concentric with respect to the general axis (20) and which serves to mount the cap (30) and which with the prefiltration block (24) defines a constricted annular passage (35) for forming a communication between the annular space (33) and the annular volume (34).

11. A collector device according to claim 1 characterised in that the impact wall member (27) carries a rod (37) which passes through the central opening (32) of the cap (30) and which is provided at its free external end with a mask (38) extending in front of the end face of said cap (30).

12. A collector device according to either one of claims 4 and 5 characterised in that, from its bottom wall portion forming the impact wall member (27), the auxiliary cup (28) has a lateral wall portion (40) which is extended from said impact wall member (27) in the form of a hollow cylinder in the direction of the cover (15) in the external peripheral space (33) over a substantial fraction of the length of the prefiltration block (24), surrounding the latter without touching it and defining with the external lateral face of said prefiltration block (24) an annular space (41) which communicates with the peripheral space (33).

## Patentansprüche

1. Tragbarer individueller Sammler für Staub, der in der Lunge zurückgehalten werden kann, mit einem Deckel (15) mit Hauptlängsachse (20) und einem mittigen Lufteinlaß (21) und wenigstens einem seitlichen Luftauslaß (16), einer drehbar um diese Hauptachse (20) im Inneren dieses Deckels (15) gelagerten Schale (6), die einen kranzartigen Körper (11) aus Filterschaum mit mittigem Luftzuführungskanal (12) enthält, einer Hutausbildung (30), die in einer Endwand (31) mit mittiger Öffnung (32) endet, die einen Vorfilterungsblock (24) enthält, der vor dem mittigen Lufteintritt (21) des Deckels (15) angeordnet ist und in einer ersten dem Deckel (15) abgelegenen Stirnfläche (26) endet, dadurch gekennzeichnet, daß der Vorfilterungsblock (24) eine mittige Durchgangsöffnung (25) aufweist, die mit dem mittigen Lufteinlaß (21) des Deckels (15) vereinigt ist, wobei der Block (24) im Inneren der Hutausbildung (30) gelagert ist, indem er gegenüber diesem letzteren einen äußeren Umfangsraum (33) freiläßt, während diese erste Stirnfläche (26) des gleichen Vorfilterungsblocks (24) mit einer Auftreffwand (27) verkleidet ist, die gasdicht ist und den Einlaß in die mittige Durchgangsöffnung (25) verschließt.

2. Sammler nach Anspruch 1, dadurch gekennzeichnet, daß der Vorfilterungsblock (24) so gestaltet und im Inneren der Hutausbildung (30) gelagert ist, daß er mit dieser Hutausbildung (30) und dem Deckel (15) ein Ringvolumen (34) begrenzt, das mit dem äußeren Umfangsraum (33) in Verbindung steht und die mittige Durchgangsöffnung (25) umschließt, die mit dem mittigen Lufteinlaß (21) vereinigt ist.

3. Sammler nach Anspruch 2, dadurch gekennzeichnet, daß der Deckel (15) mit einer Stirnfläche versehen ist, die im Inneren des Huts (30) mit einer mittigen Erhebung (18) versehen ist, die die Hauptachse (20) umschließt und vom mittigen Durchlaß (21) durchsetzt ist, der mit der Hauptdurchgangsöffnung (25) des Vorfilterungsblocks (24) verbunden ist, wobei diese mittige Erhebung (18) den Vorfilterungsblock (24) abstützt und in Querrichtung zu dieser Achse (20) eine Dicke aufweist, die kleiner als die der Hutausbildung (30) ist, derart, daß sie mit der letzteren in Querrichtung gesehen das Ringvolumen (34) begrenzt.

4. Sammler nach Anspruch 1, dadurch gekennzeichnet, daß die Auftreffwandung (27) die Bodenwandung einer Hilfsschalenausbildung (28) ist, deren Hohlvolumen in Richtung der Hauptöffnung (32) der Stirnwand (31) des Huts (30) offen ist.

5. Sammler nach Anspruch 4, dadurch gekennzeichnet, daß die Hilfsschale (28) einen Filterschaum (29) enthält.

6. Sammler nach Anspruch 1, dadurch gekennzeichnet, daß der kranzartige Körper (11) aus Filterschaum in der Drehschale (6) enthalten ist und mit der Innenfläche (7) des Bodens dieser Schale (6) ein freies Volumen (14) begrenzt.

7. Sammler nach Anspruch 6, dadurch gekennzeichnet, daß die Innenfläche (7) einen mittigen Vorsprung (8) mit gekrümmter konkaver Flanke hat, die sich im Inneren des mittigen Luftzuführungskanals (12) des kranzartigen Körpers (11) im Filterschaum koaxial zu diesem kranzartigen Körper (11) fortsetzt.

8. Sammler nach Anspruch 1, dadurch gekennzeichnet, daß die Innenfläche der Stirnwand (17) des Deckels (15) um den mittigen Lufteingang (21) über eine Innenverlängerung (19) verfügt, der sich im Inneren des mittigen Kanals (12) des kranzartigen Körpers (11) fortsetzt.

9. Sammler nach einem der Ansprüche 1 und 3, dadurch gekennzeichnet, daß der mittige Vorsprung (18) in einer Endfläche (22) mit vorstehendem Abschluß (23) endet, der den mittigen Durchlaß (21) umschließt, wobei diese Fläche (22) und dieser vorstehende Abschluß (23) dazu dienen, den Vorfilterungsblock (24) an seinem Platz zu halten, dessen mittige Durchlaßöffnung (25) vorgesehen ist, um den vorstehenden Abschluß (23) aufzunehmen.

10. Sammler nach Anspruch 9, dadurch gekennzeichnet, daß die Außenfläche der Endwandung (17) des Deckels (15) einen zur Hauptachse (20) konzentrischen Bund (36) trägt, der zur Montage der Hutausbildung (30) dient und mit dem Vorfilterungsblock (24) einen gedrosselten Ringdurchlaß (35) zur Verbindung zwischen Umfangsraum (33) und Ringvolumen (34) begrenzt.

11. Sammler nach Anspruch 1, dadurch gekennzeichnet, daß die Auftreffwandung (27) eine Stange (37) trägt, die durch die mittige Öffnung (32) der Hutausbildung (30) geht und an ihrem freien Außenende mit einer Maske (38) versehen ist, die sich vor der Endfläche der Hutausbildung (30) erstreckt.

12. Sammler nach einem der Ansprüche 4 oder 5, dadurch gekennzeichnet, daß die Hilfsschale (28), ausgehend von ihrer die Auftreffwandung (27) bildenden Bodenwandung eine seitliche Wandung (40) hat, die ausgehend von dieser Auftreffwandung (27) wie ein Hohlzylinder in Richtung des Deckels (15) in einem äußeren Umfangsraum (33) über einen wesentlichen Teil der Länge des Vorfilterblocks (24) verlängert ist, indem sie letzteren, ohne ihn zu berühen, umschließt und indem sie mit der seitlichen Außenfläche dieses Vorfilterungsblocks (24) einen Ringraum (41) begrenzt, der in Verbindung mit dem Umfangsraum (33) steht.

FIG_1

FIG_2

2